(19) **Europäisches Patentamt**
**European Patent Office**
**Office européen des brevets**

(11) **EP 4 360 772 A1**

(12) **EUROPEAN PATENT APPLICATION**

(43) Date of publication:
**01.05.2024  Bulletin 2024/18**

(21) Application number: **22383041.5**

(22) Date of filing: **28.10.2022**

(51) International Patent Classification (IPC):
**B21D 43/22** *(2006.01)*    **B25J 9/16** *(2006.01)*
**B65G 57/02** *(2006.01)*    **B65H 3/08** *(2006.01)*
**B65H 9/12** *(2006.01)*    **B65H 29/24** *(2006.01)*
**B65G 60/00** *(2006.01)*    **B21D 43/10** *(2006.01)*
**B21D 43/18** *(2006.01)*    **G01B 11/02** *(2006.01)*
**G05B 19/18** *(2006.01)*    **B21D 43/00** *(2006.01)*

(52) Cooperative Patent Classification (CPC):
**B21D 43/22; B21D 43/003; B21D 43/105;**
**B21D 43/18; B25J 9/1679; B65G 60/00;**
**G01B 11/026; G05B 19/41815;** G05B 2219/40006;
G05B 2219/40066; G05B 2219/40421;
G05B 2219/45234

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Talleres Roiri, S.L.**
**31350 Peralta (ES)**

(72) Inventors:
• **RODRIGUEZ, Antonio**
  **Peralta (ES)**
• **RODRIGUEZ, Ricardo**
  **Peralta (ES)**
• **MEDRANO, Roberto**
  **Peralta (ES)**

(74) Representative: **Balder IP Law, S.L.**
**Paseo de la Castellana 93**
**5ª planta**
**28046 Madrid (ES)**

(54) **METHOD AND SYSTEM FOR STACKING SHEET METAL PARTS**

(57)    Method and system for stacking sheet metal parts that comprises providing a fixed frame with three positioning sensors and a movable frame comprising a vacuum gripper. Upon reception of a stack of sheet metal parts the method comprises gripping one sheet metal part, moving the movable frame in the Y-axis direction until the first and second positioning sensors detect the sheet metal part, calculating an angle "α" that corresponds to the rotation in Z-axis of the part and an overrun of the movable frame, rotating the movable frame the angle "α"; moving the movable frame in X-axis direction until the third positioning sensor detects the sheet metal part; calculating distances 'd1' and 'd2' as a difference between a predefined position for stacking the sheet metal parts and the current position of the metal sheet part; moving the movable frame the calculated distances 'd$_1$' and 'd$_2$' and depositing the part.

FIG. 6

EP 4 360 772 A1

**Description**

**TECHNICAL FIELD**

This invention is related to the field of handling and conveying flat components, preferably sheet metal parts such as metal plates, metal panels or metal sheets, and more particularly to the unstacking and stacking of said sheet metal parts.

**BACKGROUND OF THE INVENTION**

Machine tools such as bending presses, laser cutting machines, drilling machines, etc., require the selective feeding of individual workpieces, with particular attention being paid to the correct alignment of the workpieces in relation to the machine tool in which they are to be processed and its particular reference system.

In the case of a non-automated or only partially automated machine tool station, the workpiece is conveyed to the machine tool, for example, by an automatic feeding device, but the correct alignment of the workpiece in relation to the machine tool must then be carried out by an operator. Thus, in such case, the correct alignment of the workpiece will rely on the user's experience. In a fully automated machine tool station, measures are required to ensure the correct alignment of the workpiece in relation to the machine tool. Since the workpieces are delivered to the machine tool on a transport pallet from an upstream processing step, for example, it is usually ensured that the workpieces are correctly arranged on the pallet in their basic alignment, but there may be slight deviations in the detailed alignment. Thus, before inserting the workpiece into the machine tool, the deviation from a target position must be corrected in any case in order to have the pieces correctly processed.

Sheet metal parts, in particular, metal sheets, panels and plates which, due to their characteristics (their delicate nature which makes them prone to suffer deformations and their large size) require specific customized solutions offering space optimization, handling precision and efficient management with no compromise on safety.

Sheet metal parts that arrive to the machining industry directly from the sheet metal part manufacturers are normally stored in stacks. The sheet metal parts in the stack are generally not perfectly aligned, existing some deviations between them. Some solutions have tried to align said stacks by using presses that exert forces on the side faces of the stack. However, during the stacking process of the sheet metal parts some substances such as water, dust or other organic or inorganic compounds could have been deposited on the surfaces of the sheet metal parts generating high cohesive and adhesive forces between them. Besides, vacuum could be created between adjacent sheet metal parts adhering them to each other. Then, the side forces applied by these presses may bend and deform some of the sheet metal parts in the stack.

Moreover, these stacks may comprise dozens of sheet metal parts that, for productive or organization reasons, may have to be unstacked to be subsequently stacked forming stacks on pallets with a different number of sheet metal parts. Sheet metal parts on pallets, as they are supplied by providers, present misalignments between them such that, before said sheet metal parts are to be stored in an automatic warehouse at the industrial facility it is convenient to restack them adequately and precisely on the pallet of the automatic warehouse without these misalignments. In this way, when these sheet metal parts arrive to the systems that are going to machine them, they are aligned with the required precision. Additionally, the storage of the pallet from the supplier, that would occupy some space in the automatic warehouse, is avoided. The unstacking and subsequent stacking steps are normally carried out in the facility in which they are going to be processed and right before they are to be stored and/or processed in the corresponding machine tools. It is important that these newly stacked sheet metal parts are correctly aligned in order to avoid having to realign them once they are in the machine tool and also in order to avoid that these misalignments may provoke defects in the machined pieces.

Besides, a correct alignment of the workpieces is also important for storing purposes. Automated storage systems for sheet metal parts are becoming quite common in the machining industry and they require a correct alignment of the parts forming the stacks in order to optimize storing operations and in order to avoid problems during storing operations.

Some other well-known solutions have been focused on using a stop device in which the workpieces are placed to ensure their correct alignment. However, these solutions have the disadvantages that the stop device has to be adapted each time the type of workpiece is changed, which usually means more work, and that it requires at least one additional work step and possibly necessitates a reorientation of the manipulation device. Using stops can also damage the machine in which they are installed due to the impact of the sheet metal parts against the stops.

In terms of the highest possible throughput in automated production, it would now be advantageous that the stacks of sheet metal parts to be processed are all correctly aligned so they can be inserted from a ready position into the machine tool.

Therefore, there is a need in the art for automated methods and systems capable of unstacking a stack of sheet metal parts and generating new stacks with a correct and accurate alignment of the sheet metal part, being said unstacking/stacking operation simple, reliable, fast and ensuring that the sheet metal parts do not suffers bends, deformities or any other damage.

**DESCRIPTION OF THE INVENTION**

For overcoming the aforementioned drawbacks, the present invention discloses a method and a system for stacking sheet metal parts that ensures a correct alignment of the stacked sheet metal parts in the stack.

A first object of the invention is a method for stacking sheet metal parts. The method comprises the steps of:

> providing a fixed frame having a reception area configured to receive a first stack of sheet metal parts and a storing area configured to store a second stack of sheet metal parts. The fixed frame also comprises at least a first positioning sensor ($X_{b1}$) and a second positioning sensor ($X_{b2}$) to position the sheet metal parts parallel to X-axis and a third positioning sensor ($Y_b$) to position the sheet metal parts parallel to Y-axis. These three positioning sensors ($X_{b1}, X_{b2}, Y_b$) may be located at any point of the fixed frame;
>
> providing a movable frame comprising a vacuum gripper configured to grip the sheet metal parts by suction. This movable frame is coupled to the fixed frame by interposition of a XYZ positioning system configured to allow the movement of the movable frame relative to the fixed frame and a rotary joint configured to rotate the fixed frame around Z-axis. As used herein, the XYZ positioning system can be any system capable to moving the movable frame relative to the fixed frame in the X-axis, Y-axis and Z-axis. Examples of XYZ positioning systems may be motion stages, motion tables, robotic arms, etc., and any combination thereof. The rotary joint may be part of the XYZ positioning system or may be a separate element;
>
> wherein, upon reception of the first stack in the reception area and for each sheet metal part of the first stack, the method further comprises the steps of:

> gripping by suction a sheet metal part of the first stack with the vacuum gripper. This sheet metal part will be the uppermost/top sheet metal part of the first stack. The vacuum gripper, once positioned to be in contact with the upper surface of the top sheet metal part, will generate a negative pressure in their vacuum cups to grip by suction said sheet metal part;
>
> moving the movable frame in the Y-axis direction until the first and second positioning sensors ($X_{b1}, X_{b2}$) of the fixed frame detect the sheet metal part. If the sheet metal part is parallel to the line defined by the first and second positioning sensors ($X_{b1}, X_{b2}$), then both positioning sensors will detect it simultaneously. However, the sheet metal part may be misaligned with the line defined by the positioning sensors ($X_{b1}, X_{b2}$) (rotated around the Z-axis) so the positioning sensors ($X_{b1}, X_{b2}$) will detect it with a small offset;

calculating, by a controller, an angle "a" as the

$$\arctan\left( {}^{C_o}/_{C_c} \right)$$

, wherein '$C_o$' is a distance travelled by the movable frame between an instant in which one of the first and the second positioning sensors ($X_{b1}, X_{b2}$) detect the sheet metal part and an instant in which the other one of the first and the second positioning sensors ($X_{b1}, X_{b2}$) detect the sheet metal part, and '$C_c$' is the distance between the first and second positioning sensors ($X_{b1}, X_{b2}$). Angle "a" determines the angular offset of the sheet metal around Z-axis. If '$C_o$' is zero because the sheet metal part is parallel to the line defined by the positioning sensors ($X_{b1}, X_{b2}$), then angle "a" will be also zero;

calculating, by the controller, a distance '$C_s$' as the $\tan(\alpha) * C_r$ wherein '$C_r$' is a distance in X-axis between a rotational axis of the rotary joint and the sensor of the first and second positioning sensors that has firstly detected the sheet metal part. '$C_s$' determines the distance that the front edge (i.e., the edge being closer to the storing area) of the sheet metal part has passed the first and second positioning sensors;

rotating, by the rotary junction, the movable frame the angle "a" so as to position the sheet metal part parallel to the X-axis, and thus, parallel to the line defined by the positioning sensors;

calculating, by the controller, a distance '$d_1$' in Y-axis as a difference between a predefined position for stacking the sheet metal parts on the storing area and '$C_s$'. '$d_1$' is the distance in Y-axis that the movable frame has to travel until it positions the sheet metal part in its predefined position in Y-axis;

moving the movable frame in X-axis direction until the third positioning sensor detects the sheet metal part;

moving the movable frame in the Y-axis direction and towards the storing area the distance '$d_1$' and in the X-axis direction a distance '$d_2$' corresponding to the difference between the position of the third sensor and the predefined position for stacking the sheet metal parts on the storing area. '$d_2$' is the distance in X-axis that the movable frame has to travel until it position the sheet metal part in its predefined position in X-axis;

depositing the sheet metal part in the predetermined position forming the second stack.

Since the sheet metal parts in the first stack can be misaligned with respect to each other, this process for stacking the sheet metal parts in the second stack can be repeated for each sheet metal part of the first stack.

In some embodiments, the method provides the movable frame with at least three positioning sensors $(X_{c1},X_{c2},Y_c)$, wherein two of the sensors $(X_{c1}, X_{c2})$ are located on a first edge of the movable frame in correspondence with the X-axis and a third sensor $(Y_c)$ is located on a second edge of the movable frame in correspondence with Y-axis. Generally, the first edge of the movable frame is the edge that is parallel to the line defined by the positioning sensors $(X_{b1}, X_{b2})$ of the fixed frame used to position the sheet metal parts parallel to X-axis, and that is located closer to the storing area when the movable frame is inside the reception area while the second edge is the edge that is perpendicular to the first edge. The movable frame will be preferably rectangular or quadrangular shaped.

In some embodiments, prior to gripping a sheet metal part of the first stack, the method comprises determining the position of the first stack in the reception area by using the three positioning sensors $(X_{c1},X_{c2},Y_c)$ of the movable frame and aligning the movable frame with the first stack based on the determined position. Although the position of the first stack can be provided to the controller by a user, it will be preferably and automatically carried out by the method for each sheet metal part of the stack due to the existence of misalignments between the sheet metal parts in the first stack.

The first time that a sheet metal part of the first stack is gripped, the method may further calculate the angular deviation of the first stack relative to the X-axis. The controller, with movable frame being aligned with X-axis and Y-axis, may calculate the angle "β" (angular deviation of the first stack) in a similar way to how the angle "a" is calculated but using the positing sensors $(X_{c1},X_{c2},Y_c)$ of the movable frame instead of the positioning sensors $(X_{b1},X_{b2},Y_b)$ of the fixed frame. Specifically, angle "β" as the $\arctan\left(D_o/D_c\right)$, wherein '$D_o$' is a distance travelled by the movable frame between an instant in which one of the first and the second positioning sensors $(X_{c1},X_{c2})$ of the movable frame detect an edge of the top sheet metal part of the first stack and an instant in which the other one of the first and the second positioning sensors $(X_{c1},X_{c2})$ detect the same edge of the sheet metal part. '$D_c$' is the distance between the first and second positioning sensors $(X_{c1},X_{c2})$ of the movable frame. Angle "β" determines the angular offset of the sheet metal around Z-axis. In this way, the movable frame is rotated the angle "β" every time a sheet metal part of the first stack is to be gripped. Since the sheet metal parts of the same stack present small misalignments between them, this calculation only needs to be carried out for the top sheet metal part of the stack.

In some embodiments, the controller is provided with the dimensions of the sheet metal parts of the first stack. Then, the movable frame moves relative to the top sheet metal part of the first stack until the sensors $(X_{c1},X_{c2})$ located in the first edge of the movable frame are located in correspondence with a first edge of the top sheet metal part and the sensor $(Y_c)$ located on a second edge of the movable frame is located in correspondence with a second edge of the top sheet metal part. After that, the controller, that knows the location of its three sensors $(X_{c1},X_{c2},Y_c)$, and the distances among them and the dimensions of the sheet metal part, determines the distance between the geometrical centre of the movable frame and the geometrical centre of the sheet metal part, in particular, the distance in the X-axis and in the Y-axis and moves the movable frame relative to the sheet metal part until both geometrical centres are coincident. At this point, the movable frame can grip the sheet metal part.

In some embodiments, prior to gripping a sheet metal part of the first stack, the method comprises providing a support element, for example a pallet of an automatic warehouse, on which the second stack of sheet metal parts is to be deposited on the storing area. This support element can be provided manually by a user or it can be provided by an automatic mechanism, for example an automatic pallet dispenser or a stacker crane.

Then, it determines the position of the support element in the storing area using the three positioning sensors $(X_{c1},X_{c2},Y_c)$ of the movable frame. To do so, the controller is provided with the dimensions of the support element and the movable frame is moved relative to the support element until the two sensors $(X_{c1},X_{c2})$ in the first edge of the movable frame are located in correspondence with a first edge of the support element and the third sensor $(Y_c)$ of the movable frame is located in correspondence with a second edge of the support element. After that, the controller, that knows the location of three sensors $(X_{c1},X_{c2},Y_c)$ of the movable frame and the distances among them and the dimensions of the support element, calculates a distance between a geometrical centre of the movable frame and the geometrical centre of the support element in the X-axis and in the Y-axis and calculates the distance between an edge of the support element and the positioning sensors $(X_{b1},X_{b2},Y_b)$ of the fixed frame using the two sensors $(X_{c1},X_{c2})$ in the first edge of the movable frame.

In some embodiments, the method comprises measuring, by a height measurement sensor $(Z_h)$ located in the movable frame, a distance in Z-axis between the movable frame and the support element or the top sheet metal part of the second stack. This measurement can be carried out after the position of the support element is determined and every time a sheet metal part is deposited on the second stack is to be gripped. With this information and knowing the thickness of the sheet metal parts, the controller knows how much the movable frame is to be lowered for depositing the next sheet metal part on the second stack.

In some embodiments, prior to gripping the sheet metal part of the first stack, the method comprises measuring, by the height measurement sensor $(Z_h)$ lo-

cated in the movable frame, a distance in Z-axis between the movable frame and the top sheet metal part of the first stack. With this information, the controller knows how much the movable frame is to be lowered for gripping the top sheet metal part of the first stack so it can instruct the XYZ positioning system to lower the movable frame the measured height until the vacuum cups of the vacuum gripper contact the upper surface of the top sheet metal part.

In some embodiments, the sheet metal parts are selected from a group comprising metal plates, metal panels, metal sheets and any combination thereof. These sheet metal parts may have any dimension, provided that they are equal or bigger than the dimensions of the movable frame. For example, the sheet metal parts may be 3000x1500x3mm or 2500x1250x2mm.

A second object of the invention is a machine for stacking sheet metal parts, that comprises a fixed frame having a reception area configured to receive a first stack of sheet metal parts, a storing area configured to store a second stack of sheet metal parts and at least three positioning sensors $(X_{b1}, X_{b2}, Y_b)$ configured to detect the sheet metal parts. These positioning sensors $(X_{b1}, X_{b2}, Y_b)$ can detect the presence of the sheet metal parts and they may be Potentiometric Position Sensors (resistance-based), Inductive Position Sensors, Eddy Current-Based Position Sensors, Capacitive Position Sensors, Magnetostrictive Position Sensors, Hall Effect-Based Magnetic Position Sensors, Fiber-Optic Position Sensors, Optical Position Sensors, Ultrasonic Position Sensors and any combination thereof. Preferably, they will be optical position sensors such as transmissive optical encoders, reflective optical encoders or interferential optical encoders.

The machine further comprises a movable frame comprising a vacuum gripper configured to grip the sheet metal parts. The vacuum gripper may comprise one or more suction or vacuum cups attached to the movable frame that use negative air pressure to adhere to the surfaces of the sheet metal parts, creating a partial vacuum on their upper surface. These vacuum cups are positioned on the movable frame on the same plane and, generally, equally spaced.

The machine also comprises a XYZ positioning system configured to move the movable frame relative to the fixed frame in the X-axis, Y-axis and Z-axis, a rotary joint located between the movable frame and the XYZ positioning system that is configured to rotate the movable frame around Z-axis and a controller configured to manage the positioning sensors, the vacuum gripper, the XYZ positioning system and the rotary joint and to carry out the steps of the method for stacking sheet metal parts a previously described. As used herein, the controller comprises the hardware and software to manage the positioning sensors, the vacuum gripper, the XYZ positioning system and the rotary joint and to carry out the steps of the method for stacking sheet metal parts a previously described. This controller may include, for example, one processor or multiple processors included in a single computing device or distributed across multiple computing devices. Preferably, the controller will be Computer Numerical Control (CNC) machine. The control unit may be integrated into the machine or may be an external device connected to the machine from which the machine is remotely controlled.

In some embodiments, the vacuum gripper may be any device comprising one or more suction or vacuum cups, also known as suckers, that use negative fluid pressure of air to adhere to the surfaces, creating a partial vacuum. The vacuum gripper will also comprise a vacuum generator to generate the vacuum and a plurality of pipes, hoses and/or duct to connect the vacuum generator with the different vacuum cups. While the vacuum cups will be attached to the movable frame, preferably equally spaced, the vacuum generator, e.g., a compressor, will be preferably attached to the fixed frame.

In some embodiments, the, wherein the movable frame is mounted on a portal-like guiding structure movable in the Y-axis direction.

In some embodiments, the movable frame comprises a height sensor $(Z_h)$ configured to measure a distance between the movable frame and the fixed frame in the Z-axis. More particularly, the height sensor $(Z_h)$ is configured to measure a distance between the movable frame and the top sheet metal part of the first stack, the top sheet metal part of the second stack and the support element.

In some embodiments, the movable frame comprises at least three positioning sensors $(X_{c1}, X_{c2}, Y_c)$, wherein two of these sensors $(X_{c1}, X_{c2})$ are located on a first edge of the movable frame in correspondence with the X-axis and the third sensor $(Y_c)$ is located on a second edge of the movable chassis in correspondence with Y-axis. These three positioning sensors $(X_{c1}, X_{c2}, Y_c)$ are configured to measure at least one of the relative position between the movable frame and the sheet metal parts on the reception area and the relative position of the movable frame and a support element on the storing area of the fixed frame.

In some embodiments, the system comprises an intermediate beam attached to the fixed frame so as to separate the reception area from the storing area, wherein the three positioning sensors $(X_{b1}, X_{b2}, Y_b)$, are mounted on the intermediate beam. Alternatively, these three positioning sensors $(X_{b1}, X_{b2}, Y_b)$ may be mounted in any other part of the fixed frame.

The solution herein disclosed provides an automated solution for stacking sheet metal parts that ensures a correct and identical alignment of all the stacked sheet metal parts so they can be inserted from a ready position into the machine tool for post processing operations. Besides, this solution presents a high flexibility since it can be used with sheet metal parts of very different dimensions by only feeding the controller with the dimensions of the sheet metal parts to be unstacked/stacked.

## BRIEF DESCRIPTION OF THE DRAWINGS

To complete the description and in order to provide a better understanding of the invention, a set of drawings is provided. Said drawings form an integral part of the description and illustrate embodiments of the invention, which should not be interpreted as restricting the scope of the invention, but just as an example of how the invention can be carried out. The drawings comprise the following figures:

Fig. 1 shows a flow diagram of the method for stacking sheet metal parts, according to a particular embodiment of the invention.

Figure 2 shows a schematic plan view of a machine for stacking sheet metal parts, according to a particular embodiment of the invention.

Figure 3 shows a plan view of the machine of Figure 2 with the movable frame positioned to determine the position of the metal sheet to be gripped.

Figure 4 shows a side view of the machine of Figure 3 with the movable frame measuring the distance in the Z-axis prior to gripping the metal sheet.

Figure 5 shows a plan view of the machine of Figure 2 with the movable frame positioned to determine the position of the pallet on the storing area.

Figure 6 shows a plan view of the machine of Figure 2 with the vacuum gripper griping a metal sheet.

Figure 7 shows a plan view of the machine of Figure 6 once the movable frame has been rotated the angle 'a'.

Figure 8 shows a plan view of the machine of Figure 7 with the movable frame moved in the X-axis direction until the third positioning sensor of the intermediate beam detects the metal sheet.

Figure 9 shows a plan view of the machine of Figure 8 with the metal sheet adequately positioned over the pallet on the storing area.

## DESCRIPTION OF A MODE OF EMBODIMENT OF THE INVENTION

In the following description, for purposes of explanation, numerous specific details are set forth in order to provide a thorough understanding of the present systems and methods. It will be apparent, however, to one skilled in the art that the present apparatus, systems, and methods may be practiced without these specific details. Reference in the specification to "an example" or similar language means that a particular feature, structure, or characteristic described in connection with that example is included as described but may not be included in other examples.

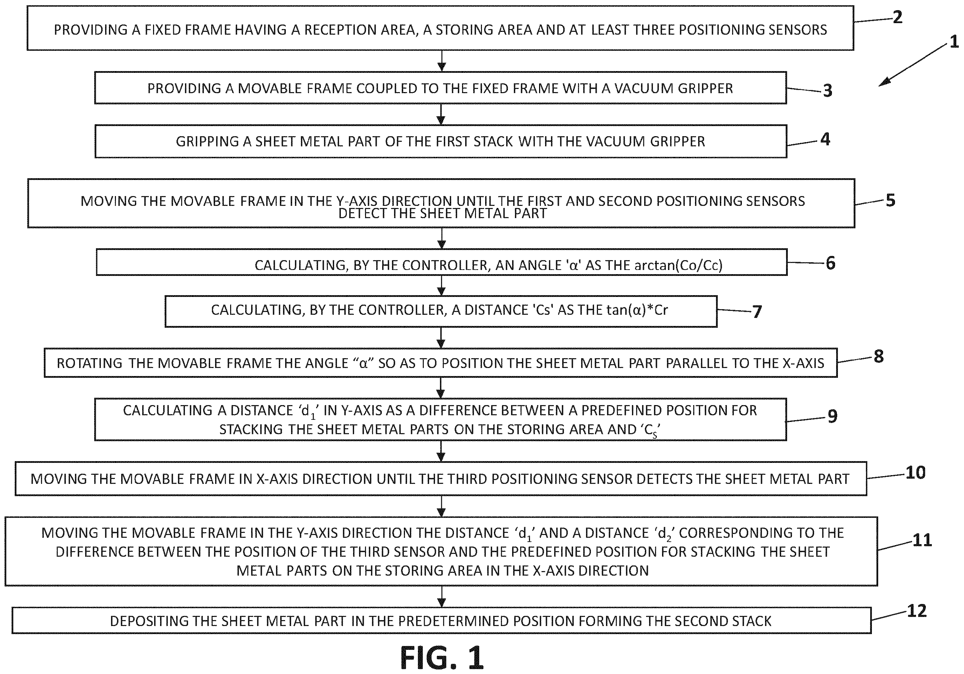

Fig. 1 shows a flow diagram of the method (1) for stacking sheet metal parts, according to a particular embodiment of the invention.

At step (2) of the method (1), a fixed frame is provided, said fixed frame having a reception area that is to receive a first stack of sheet metal parts to be unstacked and a storing area that is to store a second stack made of the same sheet metal parts. The reception area and the storing area may have different sizes although preferably they may be similar in size. The reception area and the storing area can be separated by interposition of an intermediate beam which is attached to the fixed frame. The intermediate beam is provided with a first positioning sensor $(X_{b1})$ and a second positioning sensor $(X_{b2})$ that are used to position the sheet metal parts relative to the X-axis and a third positioning sensor $(Y_b)$ that is used to position the sheet metal parts relative to Y-axis. In some other examples, there may be more positioning sensors placed along the intermediate beam. In other examples, these positioning sensors may be located in any other part of the fixed frame.

At step (3) of the method (1), a movable frame comprising a vacuum gripper configured to grip the sheet metal parts is provided. The movable frame is coupled to the fixed frame by interposition of a XYZ positioning system configured to move the movable frame relative to the fixed frame along X-axis, Y-axis and Z-axis, and a rotary joint configured to rotate the movable frame around Z-axis.

Once a first stack made of a plurality of sheet metal parts, such as metal sheets, is positioned in the reception area, at step (4) of the method (1), the top metal sheet of the first stack is gripped by suction with the vacuum gripper. To do so, the XYZ positioning system and the rotary joint will move the movable frame to position the vacuum cups of the vacuum gripper on the upper surface of the top metal sheet. Then, by means of the vacuum generator suction is generated through the vacuum cups to grip the top metal sheet. After that, the XYZ positioning system will lift the movable frame together with the top metal sheet.

At step (5) of the method (1), the movable frame is moved by the XYZ positioning system towards the storing area in the Y-axis direction until the first and second positioning sensors $(X_{b1}, X_{b2})$ have detected the metal sheet.

At step (6) of the method (1), the controller calculates an angle "a" as follows:

$$\alpha = \arctan\left(\frac{C_o}{C_c}\right),$$

wherein '$C_o$' is a distance travelled by the movable frame in Y-axis between an instant in which one of the first and the second positioning sensors $(X_{b1}, X_{b2})$ of the fixed frame detect the metal sheet and an instant in which the other one of the first and the second positioning sensors $(X_{b1}, X_{b2})$ detect the metal sheet, and '$C_c$' is the distance between the first and second positioning sensors $(X_{b1}, X_{b2})$.

At step (7) of the method (1), the controller calculates a distance '$C_s$' as follows:

$$C_s = \tan(\alpha) * C_r,$$

wherein '$C_r$' is a distance in X-axis between a rotational axis of the rotary joint and the sensor of the first and second positioning sensors ($X_{b1}$, $X_{b2}$) that has firstly detected the metal sheet.

At step (8) of the method (1), the rotary junction rotates the movable frame the angle "a" around Z-axis so as to position the metal sheet parallel to the X-axis. In particular, the edge of the metal sheet closer to the intermediate beam is positioned parallel to the X-axis and thus, to the intermediate beam itself.

At step (9) of the method (1), the controller calculates a distance '$d_1$' in Y-axis as a difference between a predefined position for stacking the metal sheets on the storing area and '$C_s$'. This distance '$d_1$' corresponds to the distance in the Y-axis that the movable frame has to be moved relative to the fixed frame to position the metal sheet in correspondence with the Y-coordinate in which is to the stacked.

At step (10) of the method (1), the movable frame is moved by the XYZ positioning system in the X-axis direction until the third positioning sensor ($Y_b$) detects the metal sheet.

At step (11) of the method (1), the movable frame is moved by the XYZ positioning in the Y-axis direction and towards the storing area the distance '$d_1$' and in the X-axis direction a distance '$d_2$' corresponding to the difference between the position of the third sensor ($Y_b$) and the predefined position for stacking the sheet metal parts on the storing area. This distance '$d2$' corresponds to the distance in the X-axis that the movable frame has to be moved relative to the fixed frame to position the metal sheet in correspondence with the X-coordinate in which is to the stacked.

At step (12) of the method (1), the metal sheet is deposited by the XYZ positioning system in the predetermined position forming the second stack. Once it has been deposited, the vacuum gripper will release the metal sheet and the movable frame will come back to the reception area to grip the next metal sheet from the first stack.

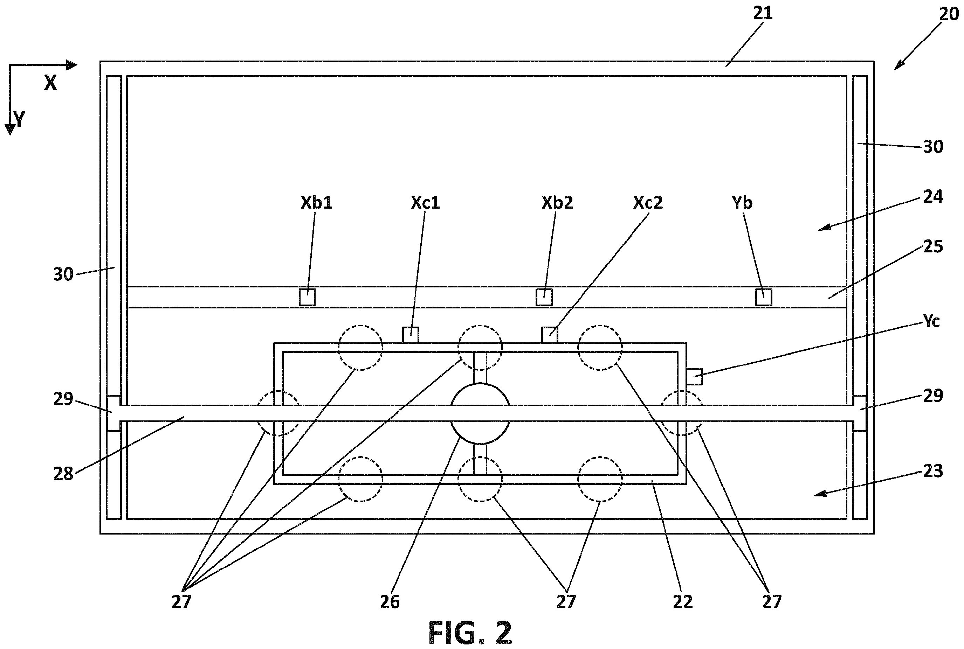

Figure 2 shows a schematic plan view of the machine (20) for stacking sheet metal parts, according to a particular embodiment of the invention. It should be understood that the machine (20) may include additional components and that some of the components described herein may be removed and/or modified without departing from a scope of the machine (20). Additionally, implementation of the example machine (20) is not limited to such example as shown in Figure 2.

The machine (20) is formed by a fixed frame (21) which is located on the ground floor of the industrial facility and a movable frame (22) which is coupled to the fixed frame (21) by interposition of a portal-like guiding structure (28,29) movable in the Y-axis direction. This portal-like guiding structure (28,29) is composed by a U-shaped arm (28) with wheels (29) located in its free ends. These wheels (29) are actuated by servomotors or similar (not shown) and run along respective guides (30) located in the fixed frame (21) or in the floor of the facility. Additionally, the U-shaped arm (28) comprises a mechanism, such as a guide or similar, (not shown) to guide the movable frame (22), which will be actuated by a motor, servomotor, etc., in the X-axis. The movable frame (22) is coupled to the U-shaped arm (28) by means of a rotary joint (26), actuated by a servomotor or similar, that allows the movable frame (22) to rotate around Z-axis. The movable frame (22) can be moved along the Z-axis by a servomotor or similar. The movement of the movable frame (22) in the 3 dimensions can be controlled by linear and rotary encoders and carried out by electric motors, rack and pinion mechanisms, gears, toothed belts, ball screws, etc.

The fixed frame (21) has a reception area (23) where the individual metal sheets or a first stack of metal sheets is to be received and a storing area (24) where the metal sheets gripped by the movable frame (22) are placed and stacked in their right position. The reception area (23) and the storing area (24) are separated by an intermediate beam (25) attached to the fixed frame (21). The intermediate beam (25) has a first positioning sensor ($Xb1$) and a second positioning sensor ($Xb2$) to position the metal sheets relative to the X-axis, in particular, parallel to X-axis, and a third positioning sensor ($Yb$) to position the metal sheets relative to the Y-axis, in particular parallel to Y-axis. These sensors will be preferably optical sensors.

The movable frame (22) comprises a vacuum gripper formed by a plurality of suction or vacuum cups (27), in this particular embodiment it comprises eight although it may comprise a different number, attached to the movable frame (22) that use negative air pressure to adhere to the surfaces of the metal sheets. These vacuum cups (27) are positioned on the movable frame (22) on the same plane and they are all fluidly connected to a vacuum system (not shown). The movable frame (22) also has two positioning sensors ($X_{c1}$, $X_{c2}$) located in correspondence with its front long edge and a third sensor ($Y_c$) located in correspondence with one of its short edge of the movable frame (22), that is perpendicular to the front long edge. These three sensors ($X_{c1}$, $X_{c2}$, $Y_c$) may be located in other locations of the movable frame (22) provided that they are parallel to X-axis and Y-axis, respectively. The three sensors ($X_{c1}$, $X_{c2}$, $Y_c$) will be preferably optical sensors.

While the machine (20) of Figure 2 has this particular design, in some other embodiments, the different elements forming the machine (20) may be in a different number and may have a different shape, design and disposition. For example, there may be a different number of positioning sensors located in different locations, the movable frame may have a different design and the number of vacuum cups could be different.

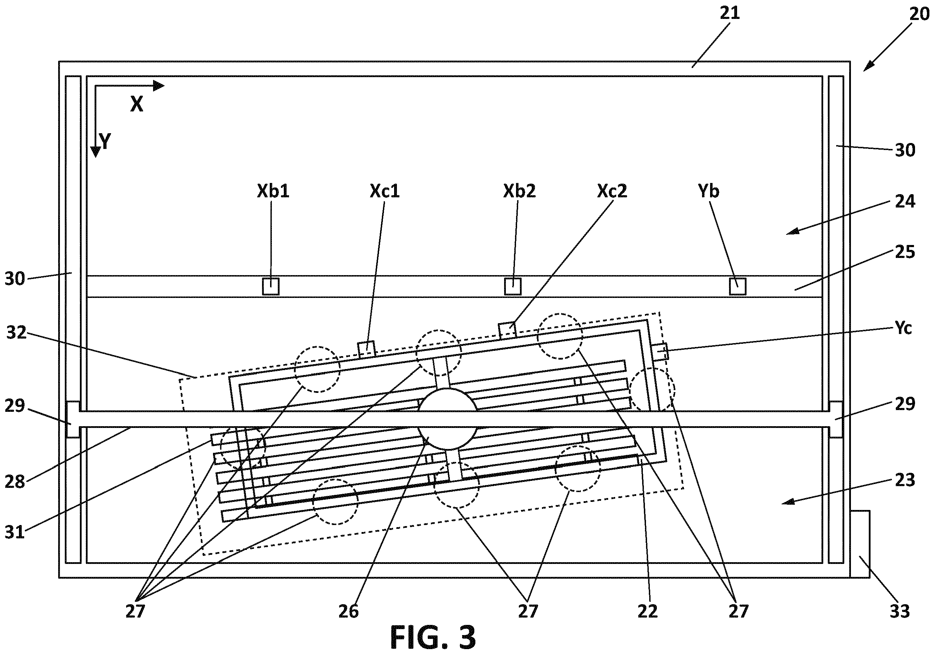

Figure 3 shows a plan view of the machine (20) of Figure 2 with the movable frame (22) positioned to determine the position of the metal sheet (32) to be gripped. The metal sheet (32) can be the top metal sheet of a stack of metal sheets stored on a pallet (31) that had been previously deposited on the reception area (23) by a user or by an automatic pallet feeding mechanism.

When the position of the metal sheets in the reception area (23) is not provided by a user to the controller (33), which is shown couped to the fixed frame (21) but it could be located on the movable frame (22) or may be external to the machine (20), the controller (33) instructs the XYZ positing system, that is to say to the motors that actuate the movable frame (22) to move in the X-axis and Y-axis, until the positioning sensors ($X_{c1}$,$X_{c2}$) detect the front long edge (the edge closer to the intermediate beam (25)) of the metal sheet (32) and the positioning sensor ($Y_c$) detects the side short edge (any of the two edges perpendicular to the front long edge) of the metal sheet (32). Since the controller (33) is provided with the dimensions of the metal sheet (32) and with a local reference system in which the origin of coordinates may be located in any point of the fixed frame (in the present embodiment said origin has been depicted in the left upper corner of the storing area (24)) and it knows the dimensions of the movable frame (22) and the distance between its three positioning sensors ($X_{c1}$,$X_{c2}$,$Y_c$) it is able to calculate the geometrical centres of the movable frame (22) and of the metal sheets (32). Then, the controller (33) can calculate the distances in the X-axis and Y-axis that the movable frame (22) has to be moved so both geometrical centres are coincident.

During the operation of detecting the edges of the metal sheet (32), the controller also calculates the angular deviation of the metal sheet (32) relative to the X-axis. The controller, having the movable frame aligned with X-axis and Y-axis, calculates the angle "β" (angular deviation of the metal sheet (32)) as the

$$\arctan \left( {D_o}/{D_c} \right)$$

, wherein '$D_o$' is a distance travelled by the movable frame (22) between an instant in which one of the first and the second positioning sensors ($X_{c1}$,$X_{c2}$) of the movable frame (22) detects the long edge of the metal sheet (32) and an instant in which the other one of the first and the second positioning sensors ($X_{c1}$,$X_{c2}$) detects the same long edge of the metal sheet (32). '$D_c$' is the distance between the first and second positioning sensors ($X_{c1}$,$X_{c2}$). This angle "β" determines the angular offset of the metal sheet (32), and thus of the first stack since all the metal sheets that form it present only slight misalignments between them, around Z-axis. In this way, the movable frame (22) is rotated the angle "β" every time a metal sheet of the first stack is to be gripped. This calculation only needs to be carried out for the top metal sheet of the stack.

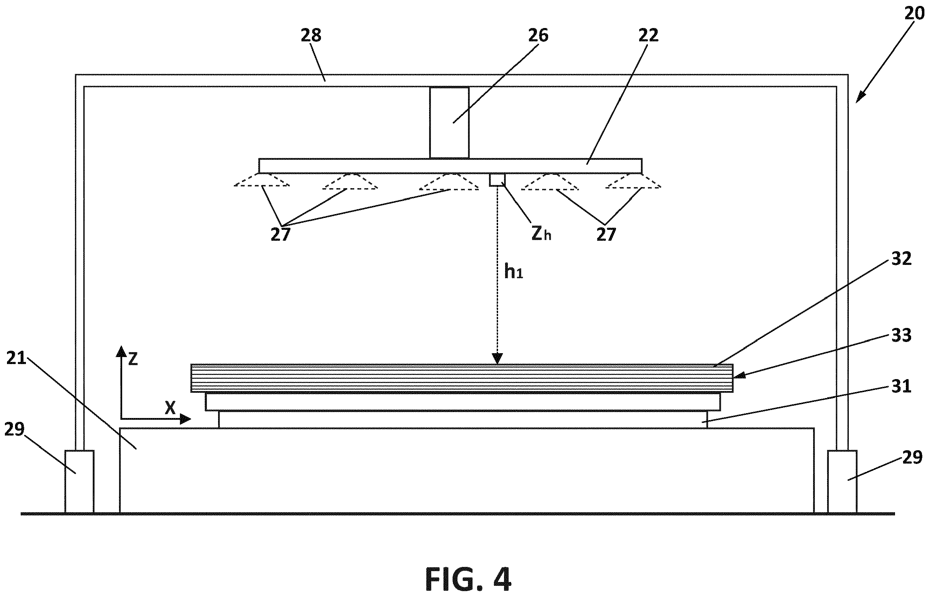

Figure 4 shows a side view of the machine (20) of Figure 3 with the movable frame (22) measuring the distance in the Z-axis prior to gripping the metal sheet (32).

The movable frame (22) comprises a fourth positioning sensor (Zh) to measure the distance (hi) between the movable frame (22) and the object located immediately below. In this case, the object is the top metal sheet (32) of the first stack (33). Knowing this distance, the controller (33) can instruct the XYZ positioning system to lower the movable frame (22) until the vacuum cups (27) contact the top metal sheet (32).

This operation can be carried out every time a metal sheet has to be gripped by the vacuum gripper or only for the uppermost metal sheet of the stack and after that the controller can subtract the thickness of one metal sheet every time a metal sheet is gripped and transported to the storing area. Alternatively, the operation can be carried out every time a metal sheet has to be gripped and its outcome compared with the calculation carried by the controller as a redundant checking mechanism.

Besides, the machine (20) will also measure this height for the pallet (not shown in this figure) located on the storing area (24). Again, this measurement can be carried out every time a metal sheet is deposited on the stack formed in the storing area (24) or it can be carried out for the empty pallet and then, the controller can just add the thickness of one metal sheet every time a metal sheet is deposited on said storing area (24). Alternatively, the operation can be carried out every time a metal sheet is deposited on the stack and this measure can be compared with the calculation carried by the controller as a redundant checking mechanism.

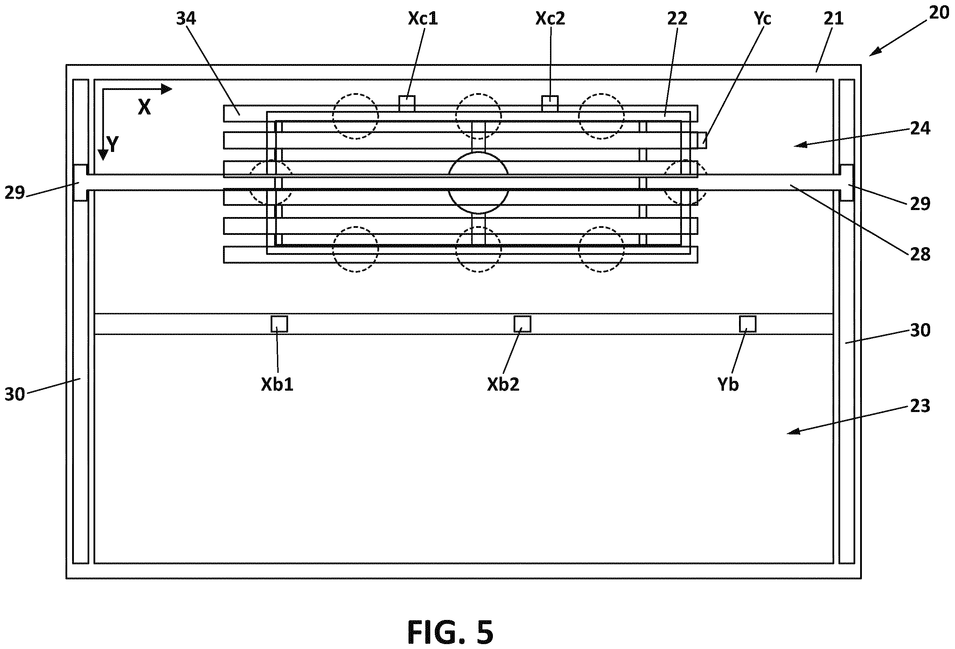

Figure 5 shows a plan view of the machine (20) of Figure 2 with the movable frame (22) positioned to determine the position of the pallet (34), preferably a pallet from an automictic warehouse, on which the stack is to be formed on the storing area (24). When the position of the pallet (34) in the storing area (24) is not provided by a user to the controller (33), the position of the pallet (34) is determined in the same way that the position of the metal sheet (32) to be gripped is determined in Figure 3, by detecting the side edges of the pallet (34) with the three positioning sensors ($X_{c1}$,$X_{c2}$,$Y_c$) and using the local reference system of the machine (20).

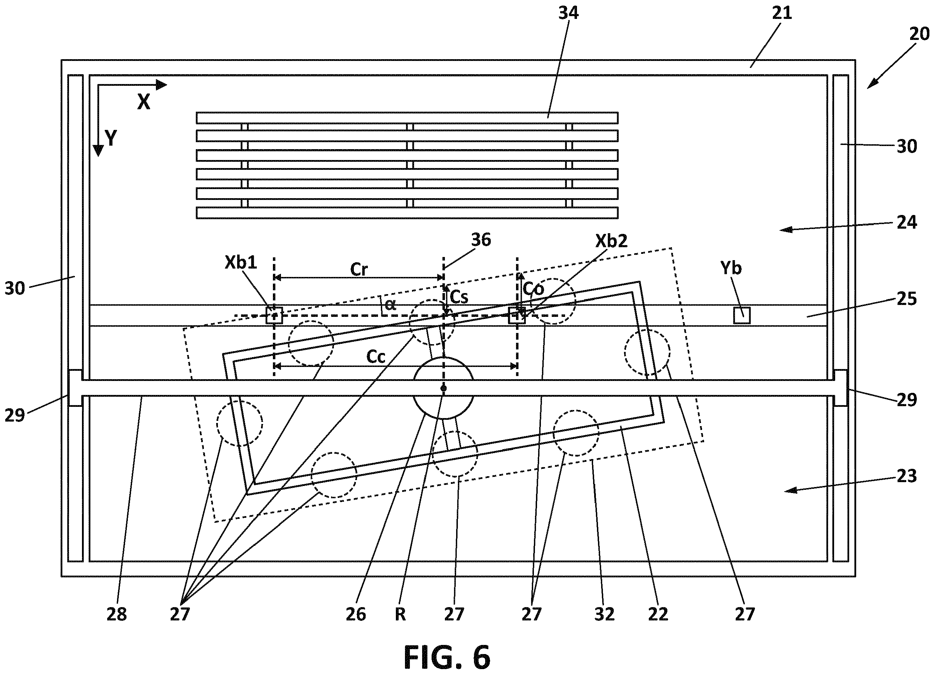

Figure 6 shows a plan view of the machine of Figure 2 with the vacuum gripper griping a metal sheet. In such embodiment, the movable frame (22) has been moved towards the storing area (24) in the Y-axis direction until the first and second positioning sensors ($X_{b1}$,$X_{b2}$) detect the metal sheet (32). The positing sensors ($X_{c1}$,$X_{c2}$,$Y_c$) of the movable frame (22) has been removed from this embodiment for clarity reasons.

The controller (33) determines the distance '$C_o$' travelled by the movable frame (22), and thus by the metal sheet (32), in the Y-axis direction between the instant in which the second positioning sensor ($X_{b2}$) detects the metal sheet (32) and the instant in which the first positioning sensor ($X_b1$) detects the metal sheet (32). The controller also knows the distance 'C$_c$' between the first and second positioning sensors (X$_b$1,X$_{b2}$). With this information, the controller calculates the angle "a" as the

$$\arctan\left(\frac{C_o}{C_c}\right)$$

. This angle "a" correspond to the angular misalignment (rotation) around Z-axis of the metal sheet (32).

The controller (33) also determines the distance 'C$_r$' in the X-axis direction between the projection in the Y-axis direction (36) of the rotational axis (R) of the rotary joint (26) and the second positioning sensor (X$_{b2}$). Then, the controller calculates the distance 'C$_s$' as the $\tan(\alpha)$ * $C_r$. This distance 'C$_s$' is the overrun of the metal sheet (32) in correspondence with the rotational axis (R) of the rotary joint (26) in the Y-axis direction.

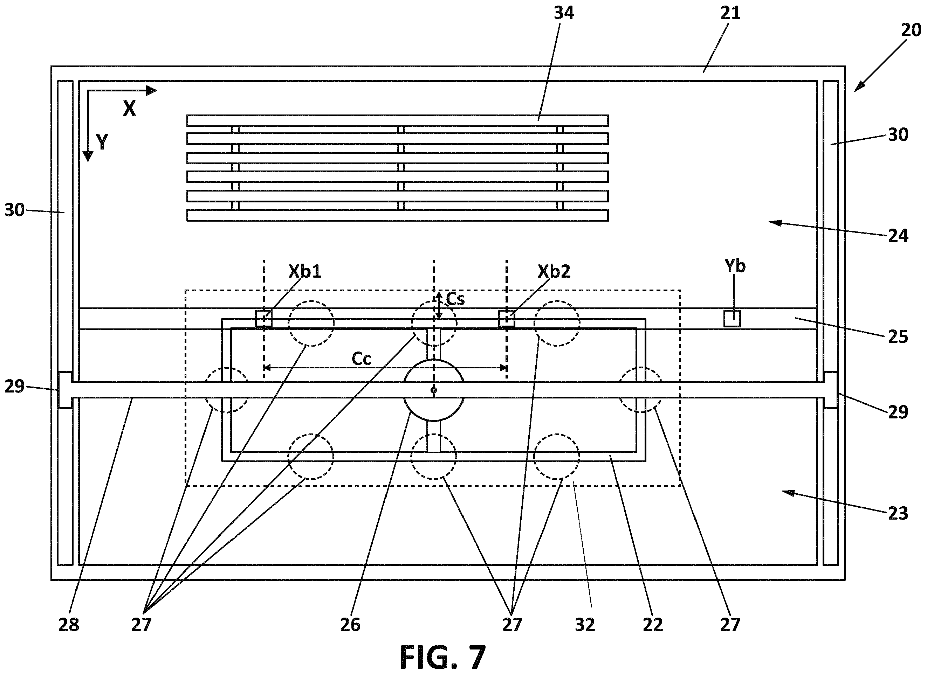

Figure 7 shows a plan view of the machine (20) of Figure 6 once the movable frame (22) has been rotated the angle 'a' to position the movable frame (22) with the metal sheet (32) parallel to the line defined by the first and second positioning sensors (X$_b$1,X$_{b2}$). The controller (33) instructs a servomotor couped to a rotary encoder (not shown) that actuate the rotary joint (26) to rotate the angle 'a' previously calculated to position the metal sheet (32) parallel to the line defined by the first and second positioning sensors (X$_b$1,X$_{b2}$) and thus, to the intermediate beam (25).

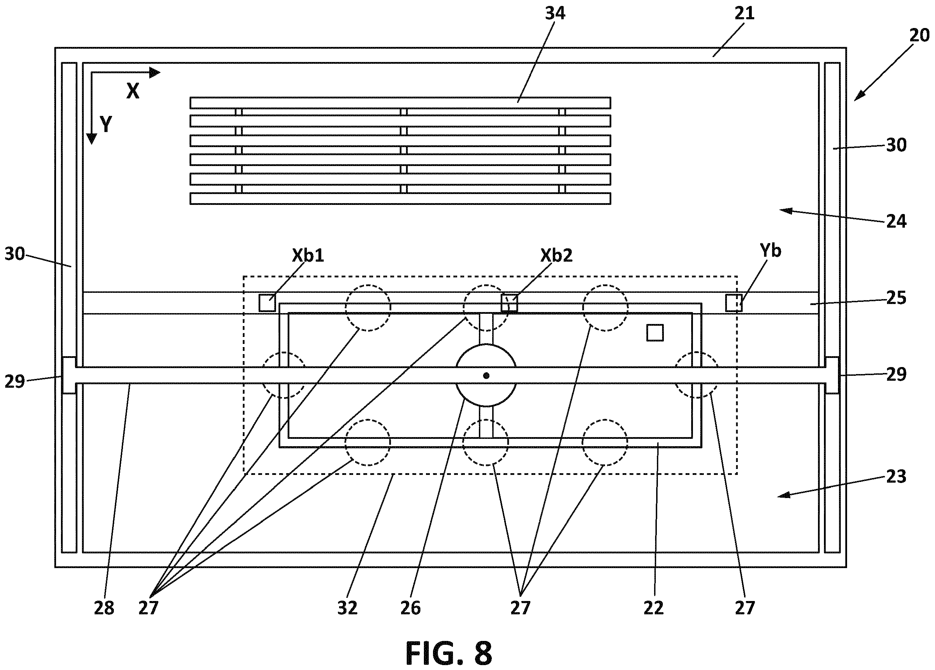

Figure 8 shows a plan view of the machine (20) of Figure 7 with the movable frame (22) moved in the X-axis direction until the third positioning sensor (Y$_b$) of the intermediate beam (25) detects the metal sheet (32). The controller (33) instructs the XYZ positing system to move the movable frame (22) relative to the portal-like guiding structure (28) until said third positioning sensor (Y$_b$) detects the metal sheet (32). At this point, the controller (33), that has previously determined the position of the pallet (34) on which the metal sheet is to be stacked is able to calculate the distances that the movable frame (22) has to travel to adequately position the metal sheet (32) on the pallet (34).

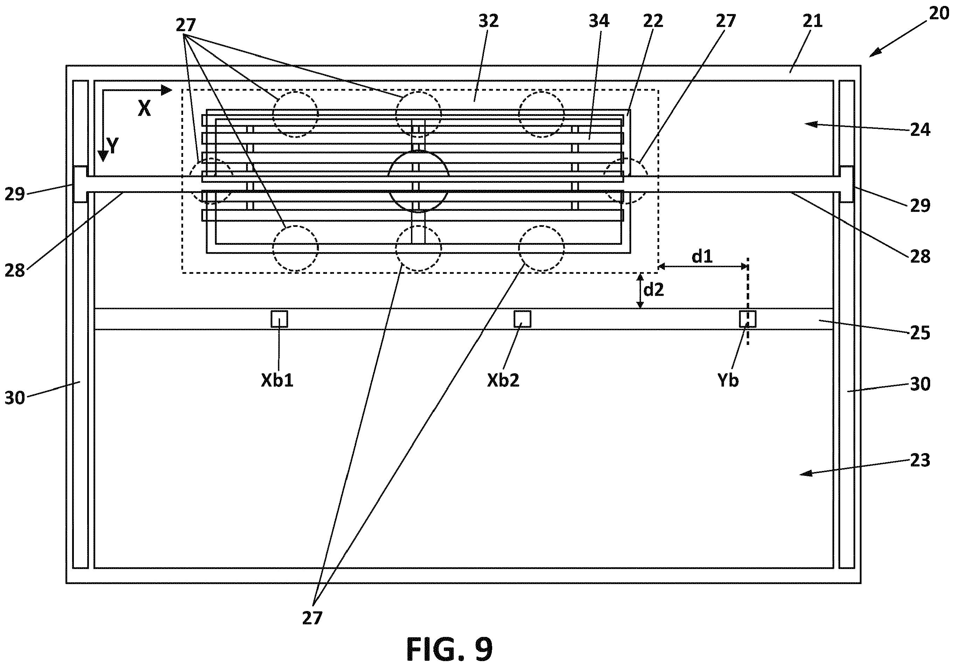

Figure 9 shows a plan view of the machine (20) of Figure 8 with the metal sheet (32) adequately positioned over the pallet (34) on the storing area (24). The controller (33), knowing the overrun of the metal sheet (32) ('C$_s$'), the position of the pallet (34) in the storing area previously determined, and the location of the three positioning sensors (X$_{b1}$,X$_{b2}$,Y$_b$) of the intermediate beam (25) within the local reference system (in other words, the distance in the X-axis of the first positioning sensor (X$_{b1}$) to the fixed frame is known and also the distances between these three sensors), is able to calculate the distances 'd1' and 'd2' and instruct the XYZ positioning system to move the movable frame (22) said distances in the X-axis direction and in the Y-axis direction, respectively, to adequately position the metal sheet (32) on the pallet (34).Once the movable frame (22), and thus the metal sheet (32), have been positioned the controller (33) instructs the XYZ positioning system to lower the movable frame (22) the corresponding height (as calculated in figure 5) to deposit the metal sheet (32) directly on the pallet (34), if it is the first metal sheet of the stack, or on the stack.

The controller (33), preferably a CNC machine, will manage the positioning sensors, the vacuum gripper, the XYZ positioning system and the rotary joint. This controller may include, for example, one processor or multiple processors included in a single computing device or distributed across multiple computing devices.

In this text, the term "comprises" and its derivations (such as "comprising", etc.) should not be understood in an excluding sense, that is, these terms should not be interpreted as excluding the possibility that what is described and defined may include further elements.

The invention is obviously not limited to the specific embodiments described herein, but also encompasses any variations that may be considered by any person skilled in the art within the general scope of the invention as defined in the claims.

**Claims**

1.    A method (1) for stacking sheet metal parts, comprising:

providing (2) a fixed frame (21) comprising a reception area (23) configured to receive a first stack of sheet metal parts, a storing area (24) configured to store a second stack of sheet metal parts, at least a first positioning sensor (X$_{b1}$) and a second positioning sensor (X$_{b2}$) to position the sheet metal parts parallel to X-axis and a third positioning sensor (Y$_b$) to position the sheet metal parts parallel to Y-axis; providing (3) a movable frame (22) comprising a vacuum gripper configured to grip the sheet metal parts, the movable frame (22) being coupled to the fixed frame (20) by interposition of a XYZ positioning system and a rotary joint (26) configured to rotate the movable frame (22) around Z-axis; wherein, upon reception of the first stack in the reception area (23) and for each sheet metal part of the first stack, the method comprises:

gripping (4) a sheet metal part (32) of the first stack with the vacuum gripper; moving (5) the movable frame (22) towards the first and second positioning sensors (X$_{b1}$,X$_{b2}$) in the Y-axis direction until the first and second positioning sensors (X$_{b1}$,X$_{b2}$) detect the sheet metal part (32);

calculating (6), by a controller (33), an angle "a" as the $\arctan\left(C_o / C_c\right)$ , wherein '$C_o$' is a distance travelled by the movable frame (22) in Y-axis between an instant in which one of the first and the second positioning sensors ($X_{b1}$,$X_{b2}$) detect the sheet metal part (32) and an instant in which the other one of the first and the second positioning sensors ($X_{b1}$ $X_{b2}$) detect the sheet metal part (22), and '$C_c$' is the distance between the first and second positioning sensors ($X_{b1}$, $X_{b2}$);

calculating (7), by the controller (33), a distance '$C_s$' as the $\tan(\alpha) * C_r$ wherein '$C_r$' is a distance in X-axis between a rotational axis of the rotary joint (26) and the sensor of the first and second positioning sensors ($X_{b1}$, $X_{b2}$) that has firstly detected the sheet metal part (32);

rotating (8), by the rotary junction (26), the movable frame (22) the angle "a" so as to position the sheet metal part (32) parallel to the X-axis;

calculating (9), by the controller (33), a distance '$d_1$' in Y-axis as a difference between a predefined position for stacking the sheet metal parts on the storing area (24) and '$C_s$';

moving (10) the movable frame (22) in X-axis direction until the third positioning sensor ($Y_b$) detects the sheet metal part (32);

moving (11) the movable frame (22) in the Y-axis direction and towards the storing area (24) the distance '$d_1$' and in the X-axis direction a distance '$d_2$' corresponding to the difference between the position of the third positioning sensor ($Y_b$) and the predefined position for stacking the sheet metal parts on the storing area (24);

depositing (12) the sheet metal part (32) in the predetermined position forming the second stack.

2. The method (1) according to claim 1, comprising providing the movable frame (22) with at least three positioning sensors ($X_{c1}$,$X_{c2}$,$Y_c$), wherein sensors ($X_{c1}$,$X_{c2}$) are located on a first edge of the movable frame (22) in correspondence with the X-axis and sensor ($Y_c$) is located on a second edge of the movable frame (22) in correspondence with Y-axis.

3. The method (1) according to claim 2, wherein prior to gripping a sheet metal part (32) of the first stack, the method comprises: determining the position of the first stack in the reception area by using the three positioning sensors ($X_{c1}$,$X_{c2}$,$Y_c$) and aligning the movable frame (32) with the first stack based on the determined position.

4. The method (1) according to claim 3, comprising:

providing the controller (33) with the dimensions of the sheet metal parts of the first stack; moving the movable frame (22) relative to the top sheet metal part of the first stack until sensors ($X_{c1}$,$X_{c2}$) are located in correspondence with a first edge of the top sheet metal part and sensor ($Y_c$) is located in correspondence with a second edge of the top sheet metal part; determining, by the controller (33), a distance between a geometrical centre of the movable frame (22) to a geometrical centre of the sheet metal part in the X-axis and in the Y-axis; moving the movable frame (22) relative to the metal sheet until both geometrical centres are coincident.

5. The method (1) according to claim 2, wherein prior to gripping a sheet metal part of the first stack, the method comprises:

providing a support element (34) on which the second stack of sheet metal parts is to be deposited on the storing area (24); and determining the position of the support element (34) in the storing area (24) using the three positioning sensors ($X_{c1}$,$X_{c2}$,$Y_c$) of the movable frame (22).

6. The method (1) according to claim 5, determining the position of the support element (34) in the storing area (24) comprises:

providing the controller (33) with the dimensions of the support element (34); moving the movable frame (22) relative to the support element (34) until the positioning sensors ($X_{c1}$,$X_{c2}$) are located in correspondence with a first edge of the support element (34) and the positioning sensor ($Y_c$) is located in correspondence with a second edge of the support element (34); determining, by the controller (33), a distance between a geometrical centre of the movable frame (22) to a geometrical centre of support element (34) in the X-axis and in the Y-axis; determining, by the controller (33), a distance between an edge of the support element (34) and the first and the second positioning sensors ($X_{b1}$,$X_{b2}$) using the positioning sensors ($X_{c1}$,$X_{c2}$) of the movable frame (22).

7. The method (1) according to claim 6, comprising measuring, by a height measurement sensor ($Z_h$) located in the movable frame (22), a distance in Z-axis between the movable frame (22) and the support element (34) or the top sheet metal part of the second stack.

8. The method (1) according to claim 1, wherein prior to gripping the sheet metal part of the first stack, the method comprises measuring, by a height measurement sensor ($Z_h$) located in the movable frame (22), a distance in Z-axis between the movable frame (22) and the top sheet metal part of the first stack.

9. The method (1) according to any one of the preceding claims, wherein the sheet metal parts are selected from a group comprising metal plates, metal panels, metal sheets and any combination thereof.

10. The method (1) according to any one of the preceding claims, wherein the support element (34) is a pallet of an automatic warehouse.

11. A machine (20) for stacking sheet metal parts, **characterized in that** it comprises:

a fixed frame (21) having a reception area (23) configured to receive a first stack of sheet metal parts, a storing area (24) configured to store a second stack of sheet metal parts, at least a first positioning sensor ($X_{b1}$) and a second positioning sensor ($X_{b2}$) to position the sheet metal parts parallel to X-axis and a third positioning sensor ($Y_b$) to position the sheet metal parts parallel to Y-axis;
a movable frame (22) comprising a vacuum gripper configured to grip the sheet metal parts;
a XYZ positioning system configured to move the movable frame (22) relative to the fixed frame (21) in the X-axis, Y-axis ad Z-axis;
a rotary joint (26) located between the movable frame (22) and the XYZ positioning system and being configured to rotate the movable frame (22) around Z-axis;
a controller (33) configured to manage the vacuum gripper, the XYZ positioning and the rotary joint (26) and to carry out the method (1) as described in any one of claims 1 to 10.

12. The machine (20) according to claim 11, wherein the movable frame (22) is mounted on a portal-like guiding structure (28,29) movable in the Y-axis direction.

13. The machine (20) according to claims 11 or 12, wherein the movable frame (22) comprises a height sensor ($Z_h$) configured to measure a distance in the Z-axis between the movable frame (22) and the top sheet metal part of the first stack, the top sheet metal part of the second stack and the support element (34).

14. The machine (20) according to any one of claims 11-13, wherein the vacuum gripper comprises a plurality of vacuum cups (27) attached to the movable frame (22), the vacuum cups (27) being fluidly connected to a vacuum generator.

15. The machine (20) according to any one of claims 11 to 14, comprising an intermediate beam (25) attached to the fixed frame (21) so as to separate the reception area (23) from the storing area (24), wherein the three positioning sensors ($X_{b1}$,$X_{b2}$,$Y_b$), are mounted on the intermediate beam (25).

```
┌──────────────────────────────────────────────────────────────────────────────────────────┐
│ PROVIDING A FIXED FRAME HAVING A RECEPTION AREA, A STORING AREA AND AT LEAST THREE          │──2
│ POSITIONING SENSORS                                                                        │
└──────────────────────────────────────────────────────────────────────────────────────────┘
                                        │                                                        ──1
                                        ▼
┌──────────────────────────────────────────────────────────────────────────────────────────┐
│ PROVIDING A MOVABLE FRAME COUPLED TO THE FIXED FRAME WITH A VACUUM GRIPPER                  │──3
└──────────────────────────────────────────────────────────────────────────────────────────┘
                                        │
                                        ▼
┌──────────────────────────────────────────────────────────────────────────────────────────┐
│ GRIPPING A SHEET METAL PART OF THE FIRST STACK WITH THE VACUUM GRIPPER                      │──4
└──────────────────────────────────────────────────────────────────────────────────────────┘
                                        │
                                        ▼
┌──────────────────────────────────────────────────────────────────────────────────────────┐
│ MOVING THE MOVABLE FRAME IN THE Y-AXIS DIRECTION UNTIL THE FIRST AND SECOND POSITIONING     │──5
│ SENSORS DETECT THE SHEET METAL PART                                                        │
└──────────────────────────────────────────────────────────────────────────────────────────┘
                                        │
                                        ▼
┌──────────────────────────────────────────────────────────────────────────────────────────┐
│ CALCULATING, BY THE CONTROLLER, AN ANGLE 'α' AS THE arctan(Co/Cc)                           │──6
└──────────────────────────────────────────────────────────────────────────────────────────┘
                                        │
                                        ▼
┌──────────────────────────────────────────────────────────────────────────────────────────┐
│ CALCULATING, BY THE CONTROLLER, A DISTANCE 'Cs' AS THE tan(α)*Cr                            │──7
└──────────────────────────────────────────────────────────────────────────────────────────┘
                                        │
                                        ▼
┌──────────────────────────────────────────────────────────────────────────────────────────┐
│ ROTATING THE MOVABLE FRAME THE ANGLE "α" SO AS TO POSITION THE SHEET METAL PART PARALLEL    │──8
│ TO THE X-AXIS                                                                              │
└──────────────────────────────────────────────────────────────────────────────────────────┘
                                        │
                                        ▼
┌──────────────────────────────────────────────────────────────────────────────────────────┐
│ CALCULATING A DISTANCE 'd₁' IN Y-AXIS AS A DIFFERENCE BETWEEN A PREDEFINED POSITION FOR     │──9
│ STACKING THE SHEET METAL PARTS ON THE STORING AREA AND 'Cₛ'                                 │
└──────────────────────────────────────────────────────────────────────────────────────────┘
```

**FIG. 2**

EP 4 360 772 A1

**FIG. 3**

EP 4 360 772 A1

**FIG. 4**

EP 4 360 772 A1

FIG. 5

**FIG. 6**

EP 4 360 772 A1

**FIG. 7**

EP 4 360 772 A1

FIG. 8

**FIG. 9**

EP 4 360 772 A1

Europäisches
Patentamt

European
Patent Office

Office européen
des brevets

# EUROPEAN SEARCH REPORT

Application Number

EP 22 38 3041

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H06 99382 A (MAZDA MOTOR) 12 April 1994 (1994-04-12) * paragraphs [0002], [0031], [0032]; figures * | 1-15 | INV. B21D43/22 B25J9/16 B65G57/02 B65H3/08 |
| X | EP 1 980 510 A1 (PUNCH GRAPHIX INT NV [BE]) 15 October 2008 (2008-10-15) * paragraphs [0018] - [0027]; claims; figures * | 1-15 | B65H9/12 B65H29/24 B65G60/00 B21D43/10 B21D43/18 |
| X | JP 2007 237394 A (AMADA CO LTD; AMADA ENG CT CO LTD) 20 September 2007 (2007-09-20) * abstract; figures * | 1-15 | G01B11/02 G05B19/18 B21D43/00 |
| A | EP 1 026 081 A2 (HAUNI MASCHINENBAU AG [DE]) 9 August 2000 (2000-08-09) * abstract; figures * | 1-15 | |
| A | WO 2016/162078 A1 (ABB TECHNOLOGY AG [CH]) 13 October 2016 (2016-10-13) * claims; figures * | 1-15 | TECHNICAL FIELDS SEARCHED (IPC) B21D B65H B65G B25J G05B G01B |

The present search report has been drawn up for all claims

| Place of search | Date of completion of the search | Examiner |
|---|---|---|
| Munich | 12 April 2023 | Knecht, Frank |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 38 3041

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2023

| Patent document cited in search report | | Publication date | Patent family member(s) | | Publication date |
|---|---|---|---|---|---|
| JP H0699382 | A | 12-04-1994 | NONE | | |
| EP 1980510 | A1 | 15-10-2008 | EP | 1980510 A1 | 15-10-2008 |
| | | | JP | 2009010334 A | 15-01-2009 |
| | | | US | 2008250959 A1 | 16-10-2008 |
| JP 2007237394 | A | 20-09-2007 | NONE | | |
| EP 1026081 | A2 | 09-08-2000 | CN | 1262207 A | 09-08-2000 |
| | | | DE | 19904443 A1 | 10-08-2000 |
| | | | EP | 1026081 A2 | 09-08-2000 |
| | | | JP | 2000226014 A | 15-08-2000 |
| | | | PL | 338232 A1 | 14-08-2000 |
| | | | US | 6599081 B1 | 29-07-2003 |
| WO 2016162078 | A1 | 13-10-2016 | CN | 107635687 A | 26-01-2018 |
| | | | EP | 3280552 A1 | 14-02-2018 |
| | | | ES | 2692224 T3 | 30-11-2018 |
| | | | JP | 6591558 B2 | 16-10-2019 |
| | | | JP | 2018510783 A | 19-04-2018 |
| | | | KR | 20170136541 A | 11-12-2017 |
| | | | US | 2018071808 A1 | 15-03-2018 |
| | | | WO | 2016162078 A1 | 13-10-2016 |

EPO FORM P0459

For more details about this annex : see Official Journal of the European Patent Office, No. 12/82